(19) Europäisches Patentamt / European Patent Office / Office européen des brevets

(11) EP 4 091 700 A1

(12) EUROPEAN PATENT APPLICATION

(43) Date of publication:
**23.11.2022 Bulletin 2022/47**

(21) Application number: **22170355.6**

(22) Date of filing: **21.07.2016**

(51) International Patent Classification (IPC):
***B01D 53/22** (2006.01)* ***B01D 71/48** (2006.01)*
***B01D 71/76** (2006.01)* ***B01D 71/82** (2006.01)*

(52) Cooperative Patent Classification (CPC):
**B01D 53/228; B01D 71/48; B01D 71/76; B01D 71/82;** B01D 71/50; B01D 71/56; B01D 71/64; B01D 71/66; B01D 71/68; B01D 71/70; B01D 2256/10; B01D 2256/20; B01D 2256/22; B01D 2256/245; B01D 2257/108; (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2015 US 201562196786 P**

(62) Document number(s) of the earlier application(s) in accordance with Art. 76 EPC:
**16745028.7 / 3 325 131**

(71) Applicant: **DuPont Industrial Biosciences USA, LLC**
**Wilmington, Delaware 19805 (US)**

(72) Inventors:
- **ELLIOTT, Beth Ann**
  **New Castle (US)**
- **LIAO, Ken-Hsuan**
  **Hockessin (US)**
- **SHIFLETT, Mark Brandon**
  **Lawrence (US)**

(74) Representative: **Mewburn Ellis LLP**
**Aurora Building**
**Counterslip**
**Bristol BS1 6BX (GB)**

Remarks:
This application was filed on 27-04-2022 as a divisional application to the application mentioned under INID code 62.

# (54) GAS SEPARATION MEMBRANE USING FURAN-BASED POLYMERS

(57) Disclosed herein is a gas separation membrane comprising a furan-based polymer, an apparatus comprising the gas separation membrane, and a process for separating a mixture of gases using said gas separation membrane. The process comprises contacting one side of a gas separation membrane comprising a furan-based polymer with a mixture of gases having a different gas permeances, whereby at least one gas from the mixture of gases permeates preferentially across the gas separation membrane, thereby separating the at least one gas from the mixture of gases.

EP 4 091 700 A1

(52) Cooperative Patent Classification (CPC): (Cont.)
B01D 2257/11

## Description

## CROSS-REFERENCE TO RELATED APPLICATION

This application claims benefit of priority of United States Provisional Application No. 62/196786 filed on July 24, 2015, which is incorporated herein by reference in its entirety.

## FIELD OF THE DISCLOSURE

The present disclosure relates in general to a gas separation membrane comprising a furan-based polymer and to a process for separating a mixture of gases using said gas separation membrane.

## BACKGROUND OF THE DISCLOSURE

A variety of polymers have been studied for small molecule separation. However, little is known about the permeability of small molecules through furan-containing polymers, particularly gases such as hydrogen, helium, nitrogen, carbon dioxide, and methane. Current polymer membranes have limitations on achieving a high selectivity with a high permeance.

New polymers are required to improve the efficiency of gas separations. Furan-based polymers provide excellent permeance with high selectivity and overcome this limitation. Hence, there is a need for new gas separation membranes comprising furan-based polymers.

## SUMMARY OF THE DISCLOSURE

In a first embodiment, there is a process for separating a mixture of gases comprising:

contacting one side of a gas separation membrane comprising a furan-based polymer with a mixture of gases having different gas permeabilities,
whereby at least one gas from the mixture of gases permeates preferentially across the gas separation membrane, thereby separating the at least one gas from the mixture of gases.

In a second embodiment, the process further comprises using a pressure differential across the gas separation membrane to separate the at least one gas from the mixture of gases.

In a third embodiment of the process, the furan-based polymer is selected from the group consisting of furan-based polyesters and copolyesters, furan-based polyamides and copolyamides, furan-based polyimides, furan-based polycarbonates, furan-based polysulfones, and furan-based polysiloxanes.

In a fourth embodiment of the process, the furan-based polymer is derived from 2,5-furan dicarboxylic acid or a derivative thereof and a $C_2$ to $C_{12}$ aliphatic diol.

In a fifth embodiment of the process, the furan-based polymer is poly(trimethylene furandicarboxylate) (PTF) derived from 2,5-furan dicarboxylic acid or a derivative thereof and 1,3-propanediol.

In a sixth embodiment of the process, the furan-based polymer is a polymer blend comprising 0.1-99.9% by weight of PTF and 99.9-0.1% by weight of a poly(alkylene terephthalate) (PAT), based on the total weight of the polymer blend, wherein the PAT comprises monomeric units derived from terephthalic acid or a derivative thereof and a $C_2$-$C_{12}$ aliphatic diol.

In a seventh embodiment of the process, the furan-based polymer is a polymer blend comprising 0.1-99.9% by weight of PTF and 99.9-0.1% by weight of a poly(alkylene furandicarboxylate) (PAF), based on the total weight of the polymer blend, wherein the PAF comprises monomeric units derived from 2,5-furan dicarboxylic acid or a derivative thereof and a $C_2$-$C_{12}$ aliphatic diol.

In an eighth embodiment of the process, the furan-based polymer is a copolyester derived from:

a) 2,5-furan dicarboxylic acid or a derivative thereof;
b) at least one of a diol or a polyol monomer; and
c) at least one of a polyfunctional aromatic acid or a hydroxy acid;

wherein the molar ratio of 2,5-furan dicarboxylic acid to at least one of the polyfunctional aromatic acid or the hydroxy acid is in the range of 1:100 to 100:1, and wherein the molar ratio of diol to total acid content is in the range of 1.2:1 to 3:1.

In a ninth embodiment of the process, the mixture of gases comprises two or more gases selected from the group consisting of hydrogen, helium, oxygen, nitrogen, carbon monoxide, carbon dioxide, and methane.

In a tenth embodiment of the process, at the least one gas is hydrogen or helium that preferentially permeates across the gas separation membrane.

In an eleventh embodiment of the process, the mixture of gases comprises at least one of the following mixtures: hydrogen and nitrogen; hydrogen and carbon monoxide; hydrogen and carbon dioxide; carbon dioxide and nitrogen; or carbon dioxide and methane.

In a twelfth embodiment of the process, the gas separation membrane is in a form selected from the group consisting of a flat film, a hollow fiber, and a spiral-wound module.

In a thirteenth embodiment, there is an apparatus for separating a mixture of gases comprising a gas separation membrane, wherein the gas separation membrane comprises a furan-based polymer.

In a fourteenth embodiment, there is a gas separation membrane comprising a furan-based polymer.

In a fifteenth embodiment, the gas separation membrane is in a form selected from the group consisting of a flat film, a hollow fiber, and a spiral-wound module.

## BRIEF DESCRIPTION OF THE DRAWINGS

The invention is illustrated by way of example and not limited to the accompanying figures.

FIG. 1 is a schematic of the membrane test apparatus.

FIG. 2 is a plot of the pressure rise on the bottom-side of the PTF polymer membrane as a function of time.

FIG. 3 is a Robeson Plot for the separation of $H_2/N_2$ gas pair showing ideal gas selectivity ($\alpha_{H2\text{-}N2}$) as a function of gas permeance ($\pi_{0H2}$) for PTF polymer membrane and Robeson's upper bound limit of other known polymeric membranes.

FIG. 4 is a Robeson Plot for the separation of $H_2/CO_2$ gas pair showing ideal gas selectivity ($\alpha_{H2\text{-}CO2}$) as a function of gas permeance ($\pi_{0H2}$) for PTF polymer membrane and Robeson's upper bound limit of other known polymeric membranes.

FIG. 5 is a Robeson Plot for the separation of $CO_2/CH_4$ gas pair showing ideal gas selectivity ($\alpha_{CO2\text{-}CH4}$) as a function of gas permeance ($\pi_{0CO2}$) for PTF polymer membrane and Robeson's upper bound limit of other known polymeric membranes.

FIG. 6 is a Robeson Plot for the separation of $CO_2/N_2$ gas pair showing ideal gas selectivity ($\alpha_{CO2\text{-}N2}$) as a function of gas permeance ($\pi_{0CO2}$) for PTF polymer membrane and Robeson's upper bound limit of other known polymeric membranes.

## DETAILED DESCRIPTION OF THE DISCLOSURE

The disclosures of all patent and non-patent literature cited herein are hereby incorporated by reference in their entirety.

The terms "comprises," "comprising," "includes," "including," "has," "having" or any other variation thereof, as used herein are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). The phrase "one or more" is intended to cover a non-exclusive inclusion. For example, one or more of A, B, and C implies any one of the following: A alone, B alone, C alone, a combination of A and B, a combination of B and C, a combination of A and C, or a combination of A, B, and C.

Also, use of "a" or "an" are employed to describe elements and described herein. This is done merely for convenience and to give a general sense of the scope of the invention. This description should be read to include one or at least one and the singular also includes the plural unless it is obvious that it is meant otherwise.

The term "gas permeance" as used herein refers to and is used interchangeably with "permeation rate" or "permeability rate" or "transmission rate" to describe the gas barrier properties of a gas separation membrane, with low gas permeance or low transmission rate in a material implying that the material has a high barrier to that particular gas.

As used herein, the gas permeance was determined using a simple model. One side (for example top side) of a planar membrane is contacted with a gas, thereby the gas permeates through the membrane and is detected on the other side (for example bottom side) of the membrane. The mass rate of change as a function of time on the bottom side of the membrane is given by Eq. (1):

$$\frac{dm}{dt} = J \cdot M_w \cdot A \qquad (1)$$

where m (g) is the mass of gas permeating through the polymer film in time $t$ (s), $J$ (mol $m^{-2}$ $s^{-1}$) is the flux, $M_w$ is the molecular weight, and A ($m^2$) is the membrane surface area. The flux can be expressed using a Fickian model as shown in Eq. (2):

$$J = \frac{\pi'}{\delta} \cdot (Pcs - Pss) \qquad (2)$$

where $\pi'$ (mol $m^{-1}$ $Pa^{-1}$ $s^{-1}$) is defined as the gas permeability, $\delta$ (m) is the polymer membrane thickness, and $P_{ss}$ and $P_{cs}$ (Pa) are the pressures on the bottom and top side of the planar membrane, respectively. Using the ideal gas law, the time rate of change in bottom side pressure, $P_{ss}$ is given by Eq. (3):

$$\frac{dPss}{dt} = \frac{A \cdot R \cdot T}{Vss} \cdot \frac{\pi'}{\delta} \cdot (\mathrm{Pcs} - \mathrm{Pss}) \qquad (3)$$

where R ($m^3$ Pa $mol^{-1}$ $K^{-1}$) is the gas constant, $T$(K) is the absolute temperature, $V_{ss}$ ($m^3$) is the bottom side volume. Assuming that the top side pressure and permeability are constant, the expression we must first assume that the top side pressure and permeability are constant. The top side gas is maintained at a constant pressure throughout the experiment with a gas regulator and constant permeability was found to be correct. Therefore, integrating Eq. (3) from the initial bottom side pressure, $P_{ss0}$ at time $t_0$ = 0 to the final bottom side pressure, $P_{ss}$ at $t_f$ = t results in Eq. (4).

$$\frac{Vss}{A \cdot R \cdot T} \cdot \ln \frac{|Pcs - Pss_0|}{|Pcs - Pss|} = \frac{\pi'}{\delta} \cdot t \qquad (4)$$

A plot of the left-hand-side of Eq. (4) versus time gives a straight line with a slope of $\frac{\pi'}{\delta} = \pi_0$, where $\pi_0$ (mol $m^{-2}$ $Pa^{-1}$ $s^{-1}$) is defined as the gas permeance. Permeance of a gas is measured in mol·$m^{-2}$·$Pa^{-1}$·$s^{-1}$ and is related to Barrer as follows:

$$3.348 \times 10^{-16} \frac{mol}{m^2 \cdot Pa \cdot \sec} = 1.0 Barrer$$

The term "ideal selectivity" as used herein is used interchangeably with "selectivity" and refers to selectivity of a gas separation membrane in separating a two component gas mixture, and is defined as the ratio of the gas permeances with "ideal" referring to the fact that mixture effects are not included. Hence, an ideal selectivity ($\alpha_{A-B}$) of a gas separation membrane for separating a gas A from a gas B from a mixture of gases comprising gases A and B, is provided by Eq. (5).

$$\alpha_{A-B} = \frac{\pi_{0A}}{\pi_{0B}} \qquad (5)$$

Selectivity may be obtained directly by contacting a gas separation membrane with a known mixture of gases and analyzing the permeate. Alternatively, a first approximation of the selectivity is obtained by measuring permeance of the gases separately on the same gas separation membrane.

The term "biologically-derived" as used herein is used interchangeably with "biobased" or "bio-derived" and

refers to chemical compounds including monomers and polymers, that are obtained in whole or in any part, from any renewable resources including but not limited to plant, animal, marine materials or forestry materials. The "biobased content" of any such compound shall be understood as the percentage of a compound's carbon content determined to have been obtained or derived from such renewable resources.

The term "furan-based polymer" as used herein refers to any polymer comprising at least one monomeric unit that contains a furan moiety, for example furan dicarboxylic acid (FDCA) or a derivative thereof, such as FDME or the like.

The term "furandicarboxylic acid" as used herein is used interchangeably with furandicarboxylic acid; 2,5-furandicarboxylic acid; 2,4-furandicarboxylic acid; 3,4-furandicarboxylic acid; and 2,3-furandicarboxylic acid. As used herein, the 2,5-furandicarboxylic acid (FDCA), is also known as dehydromucic acid, and is an oxidized furan derivative, as shown below:

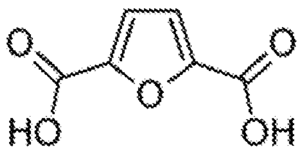

The term "furan 2,5-dicarboxylic acid (FDCA) or a functional equivalent thereof" as used herein refers to any suitable isomer of furandicarboxylic acid or derivative thereof such as, 2,5-furandicarboxylic acid; 2,4-furandicarboxylic acid; 3,4-furandicarboxylic acid; 2,3-furandicarboxylic acid; or their derivatives.

The terms "PTF" and "poly(trimethylene furandicarboxylate)" as used herein are used interchangeably to refer to poly(trimethylene furanoate), poly(trimethylene-2,5 furandicarboxylate), poly(trimethylene-2,4 furandicarboxylate), poly(trimethylene-2,3 furandicarboxylate), and poly(trimethylene-3,4 furandicarboxylate).

Disclosed herein is a gas separation membrane comprising a furan-based polymer.

The furan-based polymer, as disclosed herein, refers to any polymer comprising a monomeric unit derived from furan dicarboxylic acid (FDCA) or a derivative thereof, such as FDME or the like. Suitable example of a furan-based polymer include, but is not limited to furan-based polyesters and copolyesters, furan-based polyamides and copolyamides, furan-based polyimides, furan-based polycarbonates, furan-based polysulfones, and furan-based polysiloxanes.

In an embodiment, the furan-based polymer is a furan-based polyester obtained by polymerization of a reaction mixture comprising 2,5-furan dicarboxylic acid or a derivative thereof, a $C_2$ to $C_{12}$ aliphatic diol or a polyol, and optionally at least one of a polyalkylene ether glycol (PAEG), a polyfunctional acid, or a polyfunctional hydroxyl acid. The $C_2$ to $C_{12}$ aliphatic diol maybe linear or branched.

In a derivative of 2,5-furan dicarboxylic acid, the hydrogens at the 3 and/or 4 position on the furan ring can, if desired, be replaced, independently of each other, with $-CH_3$, $-C_2H_5$, or a $C_3$ to $C_{25}$ straight-chain, branched or cyclic alkane group, optionally containing one to three heteroatoms selected from the group consisting of O, N, Si and S, and also optionally substituted with at least one member selected from the group consisting of -Cl, -Br, -F, -I, -OH, $-NH_2$ and -SH. A derivative of 2,5-furan dicarboxylic acid can also be prepared by substitution of an ester or halide at the location of one or both of the acid moieties.

Examples of suitable $C_2$-$C_{12}$ aliphatic diols include, but are not limited to, ethylene glycol; diethylene glycol; 1,2-propanediol; 1,3-propanediol; 1,4-butanediol; 1,5-pentanediol; 1,6-hexanediol; 1,4-cyclohexanedimethanol; and 2,2-dimethyl-1,3-propanediol. In an embodiment, the aliphatic diol is a biologically derived $C_3$ diol, such as 1,3-propanediol (BioPDO™).

The furan-based polyester can be a copolyester (random or block) derived from furan dicarboxylic acid or a functional equivalent thereof, at least one of a diol or a polyol monomer, and at least one of a polyfunctional aromatic acid or a hydroxy acid. The molar ratio of furan dicarboxylic acid to at least one of a polyfunctional aromatic acid or a hydroxy acid can be any range, for example the molar ratio of either component can be greater than 1:100 or alternatively in the range of 1:100 to 100:1 or 1:9 to 9:1 or 1:3 to 3:1 or 1:1 in which the diol is added at an excess of 1.2 to 3 equivalents to total charged acid including furan dicarboxylic acid and at least one of a polyfunctional aromatic acid or a hydroxy acid.

Examples of suitable polyfunctional acids include but are not limited to terephthalic acid, isophthalic acid, adipic acid, azelic acid, sebacic acid, dodecanoic acid, 1,4-cyclohexane dicarboxylic acid, maleic acid, succinic acid, 2,6-naphthalene dicarboxylic acid, and 1,3,5-benzenetricarboxylic acid.

Examples of suitable hydroxy acids include but are not limited to, glycolic acid, hydroxybutyric acid, hydroxycaproic acid, hydroxyvaleric acid, 7-hydroxyheptanoic acid, 8-hydroxycaproic acid, 9-hydroxynonanoic acid, and lactic acid; and those derived from pivalolactone, ε-caprolactone, or L,L, D,D or D,L lactides.

Examples of other diol and polyol monomers that can be included, in addition to the $C_2$-$C_{12}$ aliphatic diol named above, in the polymerization monomer makeup from which a furan-based copolyester can be made include, but are not limited to, 1,4-benzenedimethanol, 2,2,4,4-tetramethyl-1,3-cyclobutanediol, cyclohexyldimethanol, poly(ethylene glycol), poly(tetrahydrofuran), 2,5-di(hydroxymethyl)tetrahydrofuran, isosorbide, isomannide, glycerol, pentaerythritol, sorbitol,

mannitol, erythritol, and threitol.

The molar ratio of $C_2$-$C_{12}$ aliphatic diol to the other diols and polyol monomers present in the furan-based copolyesters can be any range, for example the molar ratio of either component can be greater than 1:100 or alternatively in the range of 1:100 to 100:1 or 1:9 to 9:1 or 1:3 to 3:1 or 1:1

Exemplary furan-based polyesters that are copolymers derived from furan dicarboxylic acid, at least one of a diol or a polyol monomer, and at least one of a polyfunctional acid or a hydroxyl acid include, but are not limited to, copolymer of 1,3-propanediol, 2,5-furandicarboxylic acid and terephthalic acid; copolymer of 1,3-propanediol, ethylene glycol and 2,5-furandicarboxylic acid; copolymer of 1,3-propanediol, 1,4-butanediol and 2,5-furandicarboxylic acid; copolymer of 1,3-propanediol, 2,5-furandicarboxylic acid and succinic acid; copolymer of 1,3-propanediol, 2,5-furandicarboxylic acid; copolymer of 1,3-propanediol, 2,5-furandicarboxylic acid and adipic acid; copolymer of 1,3-propanediol, 2,5-furandicarboxylic acid and sebacic acid, copolymer of 1,3-propanediol, 2,5-furandicarboxylic acid and isosorbide; copolymer of 1,3-propanediol, 2,5-furandicarboxylic acid and isomannide.

In an embodiment, the gas separation membrane comprises a furan-based polyester, which is a copolyester derived from 2,5-furan dicarboxylic acid or a functional equivalent thereof, at least one of a diol or a polyol monomer, and at least one polyalkylene ether glycol (PAEG), wherein the molar ratio of diol or a polyol to polyalkylene ether glycol is at least 2:0.0008. The molar amount of furan dicarboxylic acid or a functional equivalent thereof, at least one of a diol or a polyol monomer, and the at least one polyalkylene ether glycol (PAEG) can be in any suitable range, for example in the range of 1:2:0.0008 to 1:2:0.145 respectively.

Suitable furan-based polyester for use in formation of a gas separation membrane of the present disclosure include, but is not limited to poly(trimethylene-2,5-furandicarboxylate) (PTF), poly(butylene-2,5-furandicarboxylate) (PBF), or poly(ethylene-2,5-furandicarboxylate) (PEF).

In an embodiment, the gas separation membrane is formed of poly(trimethylene furandicarboxylate) (PTF) derived from polycondensation of 1,3-propanediol and any suitable isomer of furan dicarboxylic acid or derivative thereof such as, 2,5-furan dicarboxylic acid, 2,4-furan dicarboxylic acid, 3,4-furan dicarboxylic acid, 2,3-furan dicarboxylic acid or their derivatives. PTF as shown below is derived from polymerization of 2,5-furan dicarboxylic acid or a derivative of the acid form and 1,3-propanediol:

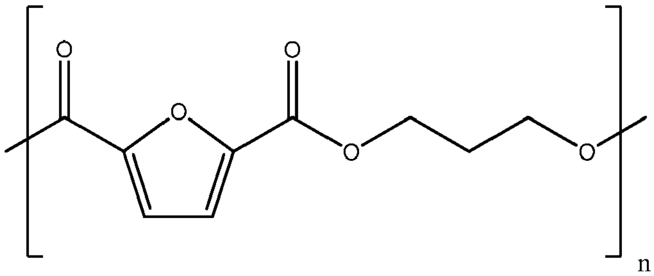

where n, the degree of polymerization is greater than 10, or greater than 50 or greater than 60, or greater than 70 or greater than 80 or greater than 85, greater than 90 and less than 1,000 or less than 800, or less than 500, or less than 300, or less than 200, or less than 185.

The poly(trimethylene furandicarboxylate) (PTF) as disclosed herein can have a number average molecular weight in the range of 1960-196000 g/mol, or 1960-98000 g/mol, or 4900-36260 g/mol.

In an embodiment, the furan-based polymer present in the gas separation membrane is a polymer blend comprising poly(trimethylene furandicarboxylate) (PTF) and poly(alkylene terephthalate) (PAT), wherein the polymer blend comprises 99.9-0.1% by weight of a poly(alkylene furandicarboxylate) (PAF) and 0.1-99.9% or at least 0.1% or at least 5% or at least 10% or less than 99.9% or less than 75% or less than 50% by weight of PTF, based on the total weight of the polymer blend. The poly(alkylene terephthalate) comprises monomeric units derived from terephthalic acid or a derivative thereof and a $C_2$-$C_{12}$ aliphatic diol.

In another embodiment, the furan-based polymer present in the gas separation membrane is a polymer blend comprising comprising poly(trimethylene furandicarboxylate) (PTF) and poly(alkylene furandicarboxylate) (PAF), wherein the polymer blend comprises and 99.9-0.1% by weight of a poly(alkylene terephthalate) (PAT) and 0.1-99.9% or at least 0.1% or at least 5% or at least 10% or less than 99.9% or less than 75% or less than 50% by weight of PTF, based on the total weight of the polymer blend. The poly(alkylene furandicarboxylate) comprises monomeric units derived from furan dicarboxylic acid or a derivative thereof and a $C_2$-$C_{12}$ aliphatic diol.

In an embodiment, the furan-based polyamide is derived from:

i) one or more dicarboxylic acids or derivatives thereof selected from the group consisting of aliphatic diacid, aromatic diacid and alkylaromatic diacid, wherein at least one of the dicarboxylic acid is furan dicarboxylic acid or a derivative

thereof, and

ii) one or more diamines selected from the group consisting aliphatic diamine, aromatic diamine and alkylaromatic diamine.

Any suitable dicarboxylic acid such as a linear aliphatic diacid, a cycloaliphatic diacid, an aromatic diacid or or an alkylaromatic diacid or mixtures thereof can be used.

The aliphatic diacid may include from 2 to 18 carbon atoms in the main chain. Suitable aliphatic diacids include, but are not limited to, oxalic acid; fumaric acid; maleic acid; succinic acid; glutaric acid; adipic acid; pimelic acid; suberic acid; azelaic acid; sebacic acid; itaconic acid; malonic acid; mesaconic acid; dodecanediacid; undecanedioic acid; 1,12-dodecanedioic acid; 1,14-tetradecanedioic acid; 1,16-hexadecanedioic acid; 1,18-octadecanedioic acid; diabolic acid; and mixtures thereof. Suitable cycloaliphatic diacids include, but are not limited to, hexahydrophthalic acids, cis- and trans-1,4-cyclohexanedicarboxylic acid, cis- and trans-1,3-cyclohexanedicarboxylic acid, cis- and trans-1,2-cyclohexanedicarboxylic acid, tetrahydrophthalic acid, trans-1,2,3,6-tetrahydrophthalic acid, hexahydrophthalic anhydride, and dihydrodicyclopentadienedicarboxylic acid.

An aromatic diacid may include a single ring (e.g., phenyl), multiple rings (e.g., biphenyl), or multiple condensed rings in which at least one is aromatic, (e.g., 1,2,3,4-tetrahydronaphthyl, naphthyl, anthryl, or phenanthryl), which is optionally mono-, di-, or trisubstituted with, e.g., halogen, lower alkyl, lower alkoxy, lower alkylthio, trifluoromethyl, lower acyloxy, aryl, heteroaryl, and hydroxy. Suitable aromatic diacids include, but are not limited to, phthalic acid; isophthalic acid; p-(t-butyl)isophthalic acid; 1,2- or 1,3-phenylenediacetic acid; terephthalic acid; 2,5-dihydroxyterephthalic acid (DHTA); 4,4'-benzo-phenonedicarboxylic acid; 2,5 and 2,7-naphthalenedicarboxylic acid and mixtures thereof.

Suitable alkylaromatic diacids include, but are not limited to, 1,2- or 1,3-phenylenediacetic acids, trimellitylimidoglycine, and 1,3-bis(4-carboxyphenoxy)propane.

Suitable aliphatic diacid halides include, but are not limited to butylene diacid chloride; butylene diacid bromide; hexamethylene diacid chloride; hexamethylene diacid bromide; octamethylene diacid chloride; octamethylene diacid bromide; decamethylene diacid chloride; decamethylene diacid bromide; dodecamethylene diacid chloride; dodecamethylene diacid bromide; and mixtures thereof.

Suitable aromatic diacid halide include, but are not limited to terephthaloyl dichloride; 4,4'-benzoyl dichloride; 2,6-naphthalenedicarboxyl acid dichloride; 1,5-naphthalene dicarboxyl acid dichloride; tolyl diacid chloride; tolylmethylene diacid bromide; isophorone diacid chloride; isophorone diacid bromide; 4,4'-methylenebis(phenyl acid chloride); 4,4'-methylenebis(phenyl acid bromide); 4,4'-methylenebis(cyclohexyl acid chloride); 4,4'-methylenebis(cyclohexyl acid bromide) and mixtures thereof.

Any suitable diamine comonomer ($H_2N-R-NH_2$) can be used, where R ($R^1$ or $R^2$) is a linear aliphatic, cycloaliphatic, aromatic or alkylaromatic group.

Any suitable aliphatic diamine comonomer ($H_2N-R-NH_2$), such as those with 2 to 12 number of carbon atoms in the main chain can be used. Suitable aliphatic diamines include, but are not limited to, 1,2-ethylenediamine; 1,6-hexamethylenediamine; 1,5-pentamethylenediamine; 1,4-tetramethylenediamine; 1,12-dodecanediamine; trimethylenediamine; 2-methyl pentamethylenediamine; heptamethylenediamine; 2-methyl hexamethylenediamine; 3-methyl hexamethylenediamine; 2,2-dimethyl pentamethylenediamine; octamethylenediamine; 2,5-dimethyl hexamethylenediamine; nonamethylenediamine; 2,2,4- and 2,4,4-trimethyl hexamethylenediamines; decamethylenediamine; 5-methylnonanediamine; undecamethylenediamine; dodecamethylenediamine; 2,2,7,7-tetramethyl octamethylenediamine; any $C_2$-$C_{16}$ aliphatic diamine optionally substituted with one or more C to C4 alkyl groups; and mixtures thereof.

Suitable cycloaliphatic diamines include, but are not limited to, bis(aminomethyl)cyclohexane; 1,4-bis(aminomethyl)cyclohexane; mixtures of 1,3- and 1,4-bis(aminomethyl)cyclohexane, 5-amino-1,3,3-trimethyl cyclohexanemethanamine; bis(p-aminocyclohexyl) methane, bis(aminomethyl)norbornane, 1,2-diaminocyclohexane, 1,4- or 1,3-diaminocyclohexane, 1,2-diaminocyclohexane, 1,4- or 1,3-diaminocyclohexane, isomeric mixtures of bis(4-aminocyclohexyl)methane,and mixtures thereof.

Any suitable aromatic diamine comonomer ($H_2N-M-NH_2$), such as those with ring sizes between 6 and 10 can be used. Suitable aromatic diamines include, but are not limited to *m*-phenylenediamine, *p*-phenylenediamine; 3,3'-dimethylbenzidine; 2,6-naphthylenediamine; 1,5-diaminonaphthalene, 4,4'-diaminodiphenyl ether; 4,4'-diaminodiphenyl sulfone; sulfonic-p-phenylene-diamine, 2,6-diaminopyridine, naphthidine diamine, benzidine, o-tolidine, and mixtures thereof.

Suitable alkylaromatic diamines include, but are not limited to, 1,3-bis(aminomethyl)benzene, m-xylylene diamine, p-xylylene diamine, 2,5-bis-aminoethyl-p-xylene, 9,9-bis(3-aminopropyl)fluorene, and mixtures thereof.

In an embodiment, the furan-based polyamide is derived from a salt comprising diamine and a dicarboxylic acid, wherein the molar ratio of diamine and the dicarboxylic acid is 1:1. It is well known in the art that 1:1 diamine:diacid salts provide a means to control stoichiometry and to provide high molecular weight in step growth polymerizations such as that used to prepare polyamides.

The number average molecular weight of the furan-based polyamide is at least 5000 g/mol, or at least 10000

g/mol, or at least 20000 g/mol or higher.

In one embodiment of the composition, the composition comprises a polymer blend comprising a furan-based polyamide and a second polyamide. In an embodiment, the second polyamide comprises an aliphatic polyamide, an aromatic polyamide (polyaramid), a polyamideimide or mixtures thereof. Suitable second polyamides include, but are not limited to, nylon-6, nylon-11, nylon-12, nylon 6-6, nylon 6-10, nylon 6-11, nylon 6-12, nylon 6/66 copolymer, nylon 6/12/66 terpolymer, poly(*para*-phenylene terephthalamide), poly(*meta*-phenylene terephthalamide), poly(*meta*-xylene adipamide) (MXD6), and mixtures thereof.

In another embodiment of the composition, the composition comprises a polymer blend comprising poly(trimethylene furandicarbonamide) (3AF) and poly(alkylene furandicarbonamide). Poly(alkylene furandicarboxylate) can be prepared from 2,5-furan dicarboxylic acid or a derivative thereof and a $C_2$-$C_{18}$ aliphatic hydrocarbon or fluorocarbon diamine, as disclosed hereinabove.

The furan-based polyimide can be derived from a monomer containing a dianhydride moiety and a monomer containing a diamine moiety, such that at least one of the monomers is furan-based. In other words, the furan-based polyimide is derived from monomers wherein at least one of dianhydride or diamine is furan-based. It is also possible for both monomers to be furan-based. Exemplary furan-based polyimide can be derived from condensing a furan-based dianhydride such as tretrahydrofuran-2,3,4,5-tetracarboxylic dianhydride and a diamine disclosed hereinabove to first give a furan-based polyamic acid, which can be subsequently converted to the furan-based polyimide.

The furan-based polysulfone can be derived from a monomer containing a diphenol moiety and a monomer containing a sulfone moiety, such that at least one of the monomers is furan-based. In other words, the furan-based polysulfone is derived from monomers wherein at least one of a diphenol or a sulfone is furan-based. It is also possible for both monomers to be furan-based.

The furan-based polycarbonate is derived from a furan-based diphenol.

The furan-based polysiloxane is derived from a furan-based siloxane.

In an embodiment, the gas separation membrane of the present disclosure has a selectivity of greater than 10 for a mixture of hydrogen and nitrogen, hydrogen and carbon monoxide, hydrogen and carbon dioxide; a selectivity of greater than 1 for mixture of carbon dioxide and nitrogen; and a selectivity of greater than 0.7 for a mixture of carbon dioxide and methane.

The gas separation membrane of the present disclosure may comprise additives commonly employed in the art such as process aids and property modifiers in addition to the furan-based polymer. Suitable additives include, but are not limited to antioxidants, plasticizers, heat stabilizers, UV light absorbers, antistatic agents, lubricants, colorants, flame retardants, nucleants, oxygen scavengers, and fillers, including nano-fillers.

The gas separation membrane of the present disclosure comprising a furan-based polymer can be formed into a number of forms or shapes well known in the art, including, but not limited to a flat film, a hollow fiber, and a spiral-wound module. Flat films can be self-supporting within a frame or supported by a substrate which is usually porous. The flat film can be used in flat configuration. Other possible configurations for flat films include winding the film in a spiral form or pleating the film to generate a higher transmembrane surface area per unit volume. Hollow fibers can be bundled in parallel flow arrangement and potted in a tube sheet at each end. The tube sheet is inserted in a typically cylindrical case to form a hollow fiber gas separation membrane module as is well known in the art. In one embodiment, the gas separation membrane is in a form selected from the group consisting of a flat film, a hollow fiber, and a spiral-wound module.

The furan-based polymer present in the gas separation membrane can be un-oriented, mono-oriented or bi-oriented.

Furthermore, the gas separation membrane as disclosed hereinabove may be a single layer or may include multiple layers, wherein each layer of the multiple layers may have a different chemical composition and wherein at least one layer of the multiple layers is formed of a furan-based polymer.

The gas separation membranes, as disclosed hereinabove have widespread industry applications. For example:

- Separation of $H_2$ and $CO_2$ in the areas of synthesis, gas production, metal catalysis manufacturing, steam-methane reforming.
- Separation of $H_2$ and $N_2$ in the areas of ammonia manufacture, organic chemistry synthesis, refinery $H_2$ recovery.

Also disclosed herein is an apparatus for separating a mixture of gases, the apparatus comprising a gas separation membrane of the present disclosure, wherein the gas separation membrane comprises a furan-based polymer as disclosed hereinabove.

Disclosed herein is a process for separating a mixture of gases comprising contacting one side of a gas separation membrane, as disclosed hereinabove, comprising a furan-based polymer with a mixture of gases having different gas permeabilities, whereby at least one gas from the mixture of gases permeates preferentially across the gas separation membrane, thereby separating the at least one gas from the mixture of gases.

In an embodiment, the process further comprises using a pressure differential across the gas separation membrane to separate the at least one gas.

In an embodiment of the process, the mixture of gases comprises two or more gases selected from the group consisting of hydrogen, helium, oxygen, nitrogen, carbon monoxide, carbon dioxide, and methane.

In an embodiment, the at least one gas that preferentially permeates across the gas separation membrane is hydrogen or helium.

In another embodiment, the process comprises separating hydrogen and/or helium from a mixture of gases comprising at least one of methane, oxygen, carbon monoxide, carbon dioxide, and nitrogen.

In yet another embodiment of the process, the mixture of gases comprises at least one of the following mixtures: hydrogen and nitrogen; hydrogen and carbon monoxide; hydrogen and carbon dioxide; carbon dioxide and nitrogen; or carbon dioxide and methane.

Non-limiting examples of compositions and methods disclosed herein include:

1. A process for separating a mixture of gases comprising:

   contacting one side of a gas separation membrane comprising a furan-based polymer with a mixture of gases having different gas permeabilities,
   whereby at least one gas from the mixture of gases permeates preferentially across the gas separation membrane,
   thereby separating the at least one gas from the mixture of gases.

2. The process of embodiment 1 further comprising using a pressure differential across the gas separation membrane to separate the at least one gas from the mixture of gases.
3. The process of embodiment 1 or 2, wherein the furan-based polymer is selected from the group consisting of furan-based polyesters and copolyesters, furan-based polyamides and copolyamides, furan-based polyimides, furan-based polycarbonates, furan-based polysulfones, and furan-based polysiloxanes.
4. The process of embodiment 1, 2, or 3, wherein the furan-based polymer is derived from 2,5-furan dicarboxylic acid or a derivative thereof and a $C_2$ to $C_{12}$ aliphatic diol.
5. The process of embodiment 1, 2, 3, or 4, wherein the furan-based polymer is poly(trimethylene furandicarboxylate) (PTF) derived from 2,5-furan dicarboxylic acid or a derivative thereof and 1,3-propanediol.
6. The process of embodiment 1, 2, or 3, wherein the furan-based polymer is a polymer blend comprising 0.1-99.9% by weight of PTF and 99.9-0.1% by weight of a poly(alkylene terephthalate) (PAT), based on the total weight of the polymer blend, wherein the PAT comprises monomeric units derived from terephthalic acid or a derivative thereof and a $C_2$-$C_{12}$ aliphatic diol.
7. The process of embodiment 1, 2, or 3, wherein the furan-based polymer is a polymer blend comprising 0.1-99.9% by weight of PTF and 99.9-0.1% by weight of a poly(alkylene furandicarboxylate) (PAF), based on the total weight of the polymer blend, wherein the PAF comprises monomeric units derived from 2,5-furan dicarboxylic acid or a derivative thereof and a $C_2$-$C_{12}$ aliphatic diol.
8. The process of embodiment 1, 2, or 3, wherein the furan-based polymer is a copolymer derived from:

   a) 2,5-furan dicarboxylic acid or a derivative thereof,
   b) at least one of a diol or a polyol monomer, and
   c) at least one of a polyfunctional aromatic acid or a hydroxyl acid,
   wherein the molar ratio of 2,5-furan dicarboxylic acid to at least one of a polyfunctional aromatic acid or a hydroxy acid is in the range of 1:100 to 100:1, and wherein the molar ratio of diol to total acid content is in the range of 1.2:1 to 3:1.

9. The process of embodiment 1, 2, 3, 4, 5, 6, 7, or 8, wherein the mixture of gases comprises two or more gases selected from the group consisting of hydrogen, helium, oxygen, nitrogen, carbon monoxide, carbon dioxide, and methane.
10. The process of embodiment 1, 2, 3, 4, 5, 6, 7, 8, or 9, wherein at the least one gas that preferentially permeates across the gas separation membrane is hydrogen or helium.
11. The process of embodiment 1, 2, 3, 4, 5, 6, 7, 8, 9, or 10, wherein the mixture of gases comprises at least one of the following mixtures: hydrogen and nitrogen; hydrogen and carbon monoxide; hydrogen and carbon dioxide; carbon dioxide and nitrogen; or carbon dioxide and methane.
12. The process of embodiment 1, 2, 3, 4, 5, 6, 7, 8, 9, or 11, wherein the gas separation membrane is in a form selected from the group consisting of a flat film, a hollow fiber, and a spiral-wound module.
13. An apparatus for separating a mixture of gases comprising a gas separation membrane, wherein the gas separation membrane comprises a furan-based polymer.

14. A gas separation membrane comprising a furan-based polymer.

15. The gas separation membrane of embodiment 13 or 14 in a form selected from the group consisting of a flat film, a hollow fiber, and a spiral-wound module.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

In the foregoing specification, the concepts have been disclosed with reference to specific embodiments. However, one of ordinary skill in the art appreciates that various modifications and changes can be made without departing from the scope of the invention as set forth in the claims below.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all embodiments.

## EXAMPLES

The present disclosure is further exemplified in the following Examples. It should be understood that these Examples, while indicating certain preferred aspects herein, are given by way of illustration only. From the above discussion and these Examples, one skilled in the art can ascertain the essential characteristics of the disclosed embodiments, and without departing from the spirit and scope thereof, can make various changes and modifications to adapt the disclosed embodiments to various uses and conditions.

## TEST METHODS

### Membrane Apparatus for measuring permeability

The design of an apparatus to accurately measure the permeation of pure gases through a semi-permeable membrane material is shown in Figure 1.

The membrane test apparatus was designed to hold circular membrane films, 95 mm in diameter and approximately 0.0762 to 0.127 mm (3 to 5 mils) in thickness, at ambient temperature conditions, and across a pressure range of 0 to 2.74 bar (-14.7psig to 25 psig). The polymer membrane was supported in the apparatus on a stainless steel sintered metal disk 3.66 inches in diameter with 0.2 micron porosity. The membrane apparatus was connected to a manifold of gases which include helium (He), hydrogen ($H_2$), carbon dioxide ($CO_2$), nitrogen ($N_2$), oxygen ($O_2$), and methane ($CH_4$). The gas pressure on the top-side of the membrane can be varied from 0 to 25 psig. The membrane apparatus can be evacuated using a vacuum pump from (0 to -14.7 psig). The pressure rise on the bottom of the membrane holder was measured as a function of time with an electronic pressure gauge which is recorded on a laptop computer.

## Materials

Helium (He), hydrogen ($H_2$), carbon dioxide ($CO_2$), nitrogen ($N_2$), oxygen ($O_2$), and methane ($CH_4$) were obtained from Air Products with a purity of 99.9%.

Poly(trimethylene-2,5-furandicarboxylate) (PTF) film with an IV of 1.032 dL/g was prepared according to the method below.

### Synthesis of High Molecular Weight Polvtrimethylene-2.5-furandicarboxylate

Step 1: Preparation of a PTF pre-polymer by polycondensation of BioPDO™ and FDME

2,5-furandimethylester (2557 g), 1,3-propanediol (1902 g), titanium (IV) isopropoxide (2 g), Dovernox-10 (5.4g) were charged to a 10-lb stainless steel stirred autoclave (Delaware valley steel 1955, vessel #: XS 1963) equipped with a stirring rod and condenser. A nitrogen purge was applied and stirring was commenced at 30 rpm to form a slurry.

While stirring, the autoclave was subject to three cycles of pressurization to 50 psi of nitrogen followed by evacuation. A weak nitrogen purge (~0.5 L/min) was then established to maintain an inert atmosphere. While the autoclave was heated to the set point of 240°C methanol evolution began at a batch temperature of 185°C. Methanol distillation continued for 120 minutes during which the batch temperature increased from 185°C to 238°C. When the temperature leveled out at 238°C, a second charge of titanium (IV) isopropoxide (2g) was added. At this time a vacuum ramp was initiated that during 60 minutes reduced the pressure from 760 torr to 300 torr (pumping through the column) and from 300 torr to 0.05 torr (pumping through the trap). The mixture, when at 0.05 torr, was left under vacuum and stirring for 5 hours after which nitrogen was used to pressurize the vessel back to 760 torr.

The formed polymer was recovered by pushing the melt through an exit valve at the bottom of the vessel and into a water quench bath. The thus formed strand was strung through a pelletizer, equipped with an air jet to dry the polymer free from moisture, cutting the polymer strand into chips ~1/4inch long and ~1/8 inch in diameter. Yield was approximately 2724 g (~5lbs). Tg was ca. 58°C (DSC, 5°C/min, 2nd heat), Tm was ca. 176°C (DSC, 5°C/min, 2nd heat). $^1$H-NMR (TCE-d) $\delta$: 7.05 (s, 2H), 4.40 (m, 4H), 2.15 (m, 2H). Mn (SEC) ~ 10300 D, PDI 1.97. IV ~ 0.55 dL/g.

Step 2: Preparation of high molecular weight PTF polymer by solid phase polymerization of the PTF pre-polymer of Step 1

In order to increase the molecular weight of the PTF pre-polymer described above, solid phase polymerization was conducted using a heated fluidized nitrogen bed. The quenched and pelletized PTF pre-polymer was initially crystallized by placing the material in an oven, subsequently heating the pellets under a nitrogen purge to 120°C for 240 minutes. At this time the oven temperature was increased to ~168°C and the pellets left under nitrogen purge condition to build molecular weight during a total duration of 96 hours. The oven was turned off and the pellets allowed to cool.

**Preparation of Gas Membranes using Poly(trimethylene-2.5-furandicarboxylate) (PTF)**

Gas membranes were produced by two methods: 1) hot-pressing PTF; and 2) by biaxially orienting cast PTF film.

1) Hot-pressed PTF film:

PTF pellets were dried at 110 °C overnight prior to the trials. The temperature of the press was set between 230 °C and 240 °C. Dried pellets were pressed between two metal plates with a pressure between 5k and 20k psi for 5 min. The pressed film was then quenched in an ice-water bath right after being taken out from the press.

2) Biaxial-oriented PTF Film:

PTF pellets were dried at 110 °C overnight prior to the trials. The extruder temperature was set up between 210 °C and 240 °C. The PTF pellets were extruded at the set temperature and were transferred on to rolls. The cooling roll was set up between 30 °C to 50 °C. The temperature and speed of the rolls were adjusted during the cast to provide desired thicknesses. The cast film rolls were kept in a refrigerator until further processing. Biaxial-oriented PTF films were made from the PTF cast films (15mil in thickness). As-made PTF cast film was cut in 15(cm)X15(cm) dimensions and was pre-annealed in an oven at 117 °C for 20 minutes under very light stretch to avoid deformation. An infrared heater was used to heat the film to 90 °C for 40 seconds. The film was biaxially stretched in the X and Y axis directions at 90 °C for 23% per second with a stretching ratio of 2X2 in order to reach 200% elongation in both the X and Y directions. The stretched film was then kept in a refrigerator for further characterizations.

**EXAMPLE 1**

**Gas Membrane Experiment with Constant Input Pressure**

A 3 mil thick hot-pressed PTF polymer membrane was loaded into the membrane apparatus. The top side of the membrane holder was flushed with He for 3 hours and then the pressure was set at 5 psig (1.36 bar). The bottom side of the membrane holder was evacuated to a pressure of -14.7 psig (0 bar). The increase in pressure on the bottom-side of the membrane was measured as a function of time and the results are shown in Figure 2. The tests were run for about 24 hours (1440 minutes). The pressure change with time can be used to calculate the permeance for He through the PTF membrane. This procedure was repeated for each of $H_2$, $CO_2$, $N_2$, $O_2$, and $CH_4$ with the top-side of the membrane maintained at a constant pressure of 5 psig (1.36 bar) and the bottom side of the membrane holder evacuated to a pressure of -14.7 psig (0 bar).

The permeance calculated from Figure 2 for each pure gas are shown in Table 1. As can be seen from Figure 2 and Table 1, He and $H_2$ have a much higher gas permeance than $CH_4$, $O_2$, $CO_2$, $N_2$ whch shows that the PTF membrane

could be used for $H_2$ and He separation from other gases (CH4, $O_2$, $CO_2$, N2).

Table 1. Gas permeance through hot-pressed PTF with a top-side membrane pressure of 1.36 bar (5 psig).

| Gas Permeance, $\pi_0$ (Barrers) | |
|---|---|
| He | 6720 |
| $H_2$ | 3226 |
| $CH_4$ | 193 |
| $O_2$ | 160 |
| $CO_2$ | 139 |
| $N_2$ | 113 |

## EXAMPLE 2

### Gas Membrane Experiment with Variable Feed Pressure

Following the procedure outlined in Example 1, the permeance of the hot-pressed PTF was also calculated for varying top-side membrane pressures. The permeance results for top-side membrane pressures of 2.74 bar and 1.01 bar (25 psig and 0 psig, respectively) are shown in Table 2.

Since permeance through the hot-pressed PTF membrane appears independent of pressure, the permeability is controlled by diffusion of the gas through the hot-pressed PTF polymer.

Table 2. Gas permeance through hot-pressed PTF with various top-side membrane pressures.

| | Gas Permeance, $\pi_0$ (Barrers) | | |
|---|---|---|---|
| Top Side Pressure | 1.01 bar | 1.36 bar | 2.74 bar |
| He | -- | 6720 | 7497 |
| $H_2$ | 3285 | 3226 | 3136 |
| $CH_4$ | 139 | 193 | 250 |
| $O_2$ | 140 | 160 | 60 |
| $CO_2$ | 178 | 139 | 164 |
| $N_2$ | 272 | 113 | 145 |

The ideal selectivity, or the ratio of the permeance of two gases, was calculated from the results of Example 1 for select pairs of gases of interest. The calculated ideal selectivities for hot-pressed PTF polymer membranes are shown in Table 3. The ideal gas selectivity (also referred to as the perm-selectivity) is defined as the ratio of the gas permeances with ideal referring to the fact that mixture effects are not included. For example, the hydrogen ($H_2$) to nitrogen ($N_2$) ideal gas selectivity is provided by Eq. (5).

$$\alpha_{H2\text{-}N2} = \frac{\pi_{0H2}}{\pi_{0N2}} \qquad (5)$$

Table 3. Ideal selectivity values for hot-pressed PTF with a top-side membrane pressure of 1.36 bar (5 psig).

| Ideal Selectivity ($\alpha$) | |
|---|---|
| Top-Side Pressure | 1.36 bar (5 psig) |
| $H_2$ / $N_2$ | 28.5 |
| $H_2$ / $CO_2$ | 23.2 |

(continued)

| Ideal Selectivity ($\alpha$) | |
|---|---|
| Top-Side Pressure | 1.36 bar (5 psig) |
| $CO_2$ / $N_2$ | 1.22 |
| $CO_2$ / $CH_4$ | 0.72 |

The ideal selectivity values for hot-pressed PTF shown in Table 3 for various pair of gases were compared to the Robeson's upper bound limit of other known polymeric membranes (L.M. Robeson, "The Upper Bound Revisited", Journal of Membrane Science, 2008, 320, 390-400). The Robeson's upper bound line sets a limit above which the membrane is said to be "uniquely highly selective." Figures 3 - 6 illustrate the comparison between the selectivities for hot-pressed PTF and Robeson's upper bound determined from a database of known polymer membranes for each pair of gases.

Based on Figures 3 and 4, the gas separation membrane comprising the PTF polymer appears to be highly selective for $H_2$ gas, especially with respect to $N_2$ and $CO_2$ separations and significantly higher in selectivity versus the current membrane materials for $H_2$. Figures 5 and 6 show that the PTF polymer membrane has low selectivity for separating $CO_2/CH_4$ and $CO_2/N_2$.

## EXAMPLE 3

### Permeance and Selectivity for Hot-Pressed Versus Biaxial-Oriented PTF Films

Following the same procedure as outlined in Example 1, a sample of PTF membrane prepared with a biaxial orientation was tested for permeability. The resultant gas permeance and selectivity values are shown in Tables 4 and 5, respectively with a comparison to the results from the hot-pressed PTF film.

Table 4. Gas permeance values for biaxial oriented PTF in comparison to the results from Example 1.

| Gas Permeance, $\pi_0$ (Barrers) | | |
|---|---|---|
| Top-Side Pressure | 1.36 bar (5 psig) | |
| | Hot Pressed | Biaxial Oriented |
| He | 6720 | 8662 |
| $H_2$ | 3226 | 4540 |
| $CH_4$ | 193 | 112 |
| $O_2$ | 160 | 226 |
| $CO_2$ | 139 | 283 |
| $N_2$ | 113 | 92 |

The process to prepare films has an impact on gas permeance. Gas permeance for He, $H_2$, $O_2$ and $CO_2$ was higher for biaxial-oriented films compared to hot-pressed films. Gas permeance for $CH_4$ and $N_2$ was worse for biaxial-oriented films compared to hot-pressed films.

Table 5. Ideal selectivity values for biaxial oriented PTF in comparison to the results from Examples 9-12.

| Ideal Selectivity ($\alpha$) | | |
|---|---|---|
| Top-Side Pressure | 1.36 bar (5 psig) | |
| | Hot Pressed | Biaxial Oriented |
| $H_2$ / $N_2$ | 28.5 | 49.2 |
| $H_2$ / $CO_2$ | 23.2 | 16.04 |
| $CO_2$ / $N_2$ | 1.22 | 3.07 |

(continued)

| Ideal Selectivity ($\alpha$) | | |
|---|---|---|
| Top-Side Pressure | 1.36 bar (5 psig) | |
| | Hot Pressed | Biaxial Oriented |
| $CO_2$ / $CH_4$ | 0.72 | 2.52 |

As a result in the change in permeance, the ideal selectivity of pairs of gases is different for films prepared using biaxial orientation compared to films that were hot pressed. The ideal selectivity for $H_2/N_2$, $CO_2/N_2$, and $CO_2/CH_4$ was higher for biaxial-oriented films compared to hot-pressed films. The ideal selectivity of $H_2/CO_2$ was worse for biaxial-oriented films compared to hot-pressed films.

## EXAMPLE 4

### Gas Membrane Reproducibility Test

To confirm the reproducibility of results and the validity of the membrane apparatus described in Example 4, the $H_2$ permeance gas test from Example 4 was repeated an additional five times, for a total of six trials.

In each trial, the permeability of $H_2$ gas through biaxial oriented PTF film was measured, with a top-side membrane pressure of 5 psig (1.36 bar). The results from each trial are shown in Table 6.

Table 6. Reproducibility of $H_2$ permeance results for biaxial oriented PTF.

| H2 Gas | Gas Permeance, $\pi_0$ (Barrers) |
|---|---|
| Example 4 | 4540 |
| Trial 1 | 3853 |
| Trial 2 | 3823 |
| Trial 3 | 3913 |
| Trial 4 | 3853 |
| Trial 5 | 3644 |
| Average | 3938 |
| Standard Deviation | 309 |
| Percent Standard Deviation | 7.85% |

Averaging over n = 6 trials, the average $H_2$ permeance through biaxial oriented PTF membrane was determined to be 3938 Barrers with a percent standard deviation of 7.85%.

The following numbered clauses contain further statements of various aspects of the present invention: -

Clause 1. A process for separating a mixture of gases comprising:

contacting one side of a gas separation membrane comprising a furan-based polymer with a mixture of gases having different gas permeabilities,
whereby at least one gas from the mixture of gases permeates preferentially across the gas separation membrane,
thereby separating the at least one gas from the mixture of gases.

Clause 2. The process of clause 1, further comprising using a pressure differential across the gas separation membrane to separate the at least one gas from the mixture of gases.

Clause 3. The process of clause 1, wherein the furan-based polymer is selected from the group consisting of furan-based polyesters and copolyesters, furan-based polyamides and copolyamides, furan-based polyimides, furan-based polycarbonates, furan-based polysulfones, and furan-based polysiloxanes.

Clause 4. The process of clause1, wherein the furan-based polymer is derived from 2,5-furan dicarboxylic acid or a derivative thereof and a $C_2$ to $C_{12}$ aliphatic diol.

Clause 5. The process of clause 1, wherein the furan-based polymer is derived from 2,5-furan dicarboxylic acid or a derivative poly(trimethylene furandicarboxylate) thereof and 1,3-propanediol.

Clause 6. The process of clause 1, wherein the furan-based polymer is a polymer blend comprising 0.1-99.9% by weight of poly(trimethylene furandicarboxylate) and 99.9-0.1% by weight of a poly(alkylene terephthalate), based on the total weight of the polymer blend, wherein the poly(alkylene terephthalate) comprises monomeric units derived from terephthalic acid or a derivative thereof and a $C_2$-$C_{12}$ aliphatic diol.

Clause 7. The process of clause 1, wherein the furan-based polymer is a polymer blend comprising 0.1-99.9% by weight of poly(trimethylene furandicarboxylate) and 99.9-0.1% by weight of a poly(alkylene furandicarboxylate), based on the total weight of the polymer blend, wherein the poly(alkylene furandicarboxylate) comprises monomeric units derived from 2,5-furan dicarboxylic acid or a derivative thereof and a C2-C12 aliphatic diol.

Clause 8. The process of clause1, wherein the furan-based polymer is a copolyester derived from:

a) 2,5-furan dicarboxylic acid or a derivative thereof;
b) at least one of a diol or a polyol monomer; and
c) at least one of a polyfunctional aromatic acid or a hydroxy acid;
wherein the molar ratio of 2,5-furan dicarboxylic acid to at least one of the polyfunctional aromatic acid or the hydroxy acid is in the range of 1:100 to 100:1, and wherein the molar ratio of diol to total acid content is in the range of 1.2:1 to 3:1.

Clause 9. The process of clause1, wherein the mixture of gases comprises two or more gases selected from the group consisting of hydrogen, helium, oxygen, nitrogen, carbon monoxide, carbon dioxide, and methane.

Clause 10. The process of clause1, wherein at the least one gas that preferentially permeates across the gas separation membrane is hydrogen or helium.

Clause 11. The process of clause1, wherein the mixture of gases comprises at least one of the following mixtures: hydrogen and nitrogen; hydrogen and carbon monoxide; hydrogen and carbon dioxide; carbon dioxide and nitrogen; or carbon dioxide and methane.

Clause 12. The process of clause 1, wherein the gas separation membrane is in a form selected from the group consisting of a flat film, a hollow fiber, and a spiral-wound module.

Clause 13. An apparatus for separating a mixture of gases comprising a gas separation membrane, wherein the gas separation membrane comprises a furan-based polymer.

Clause 14. A gas separation membrane comprising a furan-based polymer.

Clause 15. The gas separation membrane of clause14 in a form selected from the group consisting of a flat film, a hollow fiber, and a spiral-wound module.

## Claims

**1.** A process for separating a mixture of gases comprising:

contacting one side of a gas separation membrane comprising a furan-based polymer with a mixture of gases having different gas permeabilities,
whereby at least one gas from the mixture of gases permeates preferentially across the gas separation membrane,
thereby separating the at least one gas from the mixture of gases wherein the furan-based polymer comprises at least one monomeric unit that contains a furan dicarboxylic acid moiety or a derivative thereof,
wherein the process comprises separating hydrogen and/or helium from a mixture of gases comprising at least

one of methane, oxygen, carbon monoxide, carbon dioxide, and nitrogen.

2. The process of claim 1, further comprising using a pressure differential across the gas separation membrane to separate the at least one gas from the mixture of gases.

3. The process of any of the preceding claims wherein the mixture of gases comprises hydrogen and nitrogen, hydrogen and carbon dioxide or hydrogen and carbon monoxide.

4. The process of claims 1 or 2 wherein the mixture of gases comprises hydrogen and nitrogen or hydrogen and carbon dioxide.

5. The process of claim 3 or 4 where the gas separation membrane has a selectivity of greater than 10.

6. The process of any of the preceding claims , wherein the furan-based polymer is selected from the group consisting of furan-based polyesters and copolyesters, furan-based polyamides and copolyamides, furan-based polyimides, furan-based polycarbonates, furan-based polysulfones, and furan-based polysiloxanes.

7. The process of any of the preceding claims, wherein the furan-based polymer is derived from 2,5-furan dicarboxylic acid or a derivative thereof and a $C_2$ to $C_{12}$ aliphatic diol.

8. The process of and of the preceding claims, wherein the furan-based polymer is poly(trimethylene furandicarboxylate) derived from 2,5-furan dicarboxylic acid or a derivative thereof and 1,3-propanediol.

9. The process of claims 1 to 7, wherein the furan-based polymer is a polymer blend comprising 0.1-99.9% by weight of poly(trimethylene furandicarboxylate) and 99.9-0.1% by weight of a poly(alkylene terephthalate), based on the total weight of the polymer blend, wherein the poly(alkylene terephthalate) comprises monomeric units derived from terephthalic acid or a derivative thereof and a $C_2$-$C_{12}$ aliphatic diol.

10. The process of claims 1 to 7, wherein the furan-based polymer is a polymer blend comprising 0.1-99.9% by weight of poly(trimethylene furandicarboxylate) and 99.9-0.1% by weight of a poly(alkylene furandicarboxylate), based on the total weight of the polymer blend, wherein the poly(alkylene furandicarboxylate) comprises monomeric units derived from 2,5-furan dicarboxylic acid or a derivative thereof and a C2-C12 aliphatic diol.

11. The process of claims 1 to 7, wherein the furan-based polymer is a copolyester derived from:

a) 2,5-furan dicarboxylic acid or a derivative thereof;
b) at least one of a diol or a polyol monomer; and
c) at least one of a polyfunctional aromatic acid or a hydroxy acid;
wherein the molar ratio of 2,5-furan dicarboxylic acid to at least one of the polyfunctional aromatic acid or the hydroxy acid is in the range of 1:100 to 100:1, and wherein the molar ratio of diol to total acid content is in the range of 1.2:1 to 3:1.

12. The process of any of the preceding claims, wherein the gas separation membrane is in a form selected from the group consisting of a flat film, a hollow fiber, and a spiral-wound module.

13. An apparatus for separating hydrogen and/or helium from a mixture of gases comprising at least one of methane, oxygen, carbon monoxide, carbon dioxide, and nitrogen, the apparatus comprising a gas separation membrane, wherein the gas separation membrane comprises a furan-based polymer
wherein the furan-based polymer comprises at least one monomeric unit that contains a furan dicarboxylic acid moiety or a derivative thereof.

14. A gas separation membrane for separating hydrogen and/or helium from a mixture of gases comprising at least one of methane, oxygen, carbon monoxide, carbon dioxide, and nitrogen comprising a furan-based polymer,
wherein the furan-based polymer comprises at least one monomeric unit that contains a furan dicarboxylic acid moiety or a derivative thereof, preferably wherein the gas separation membrane is in a form selected from the group consisting of a flat film, a hollow fiber, and a spiral-wound module.

15. Use of a gas separation membrane to separate hydrogen and/or helium from a mixture of gases comprising at least

one of methane, oxygen, carbon monoxide, carbon dioxide, and nitrogen, wherein the gas separation membrane comprises a furan-based polymer comprising at least one monomeric unit that contains a furan dicarboxylic acid moiety or a derivative thereof.

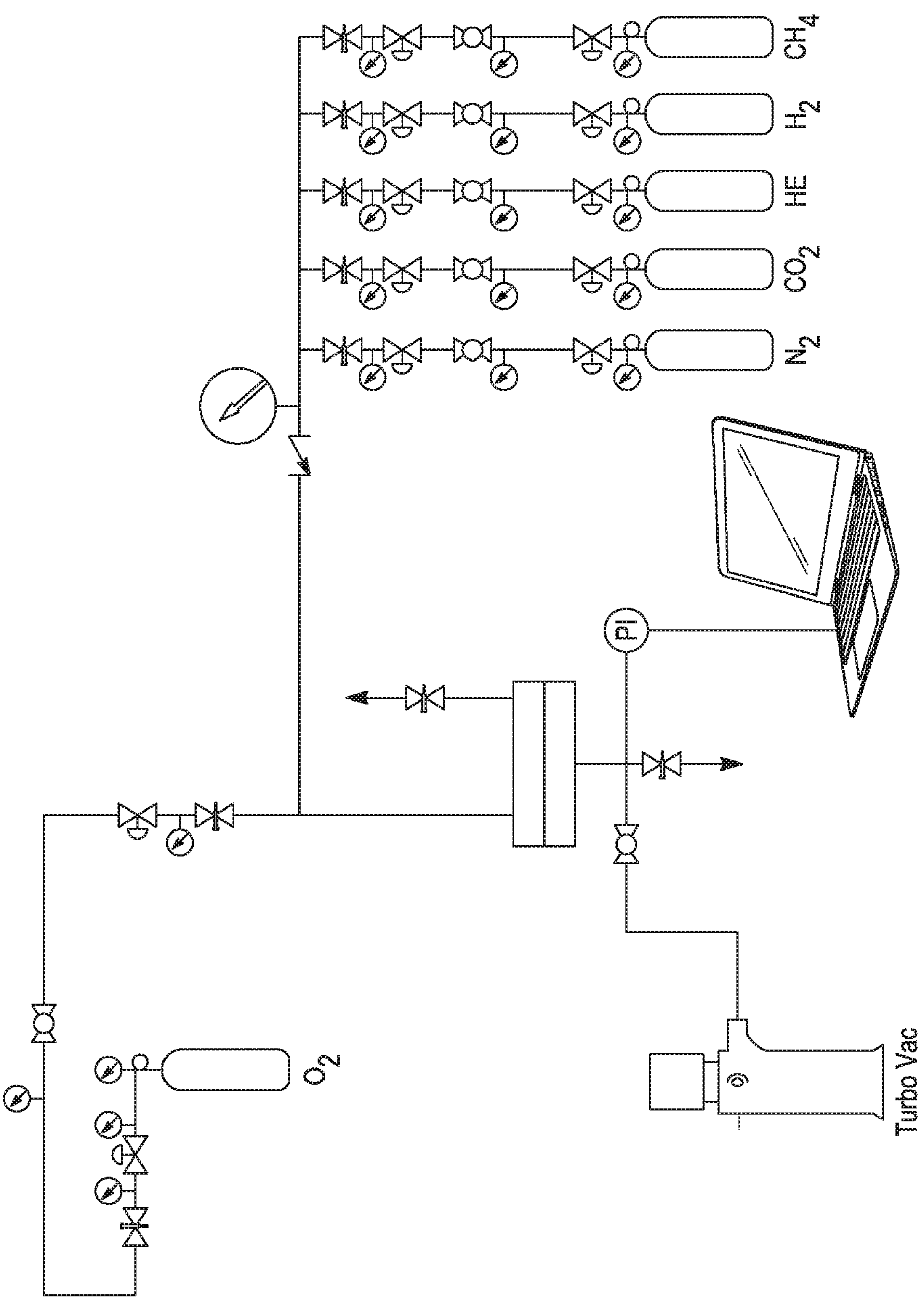


*FIG. 1*

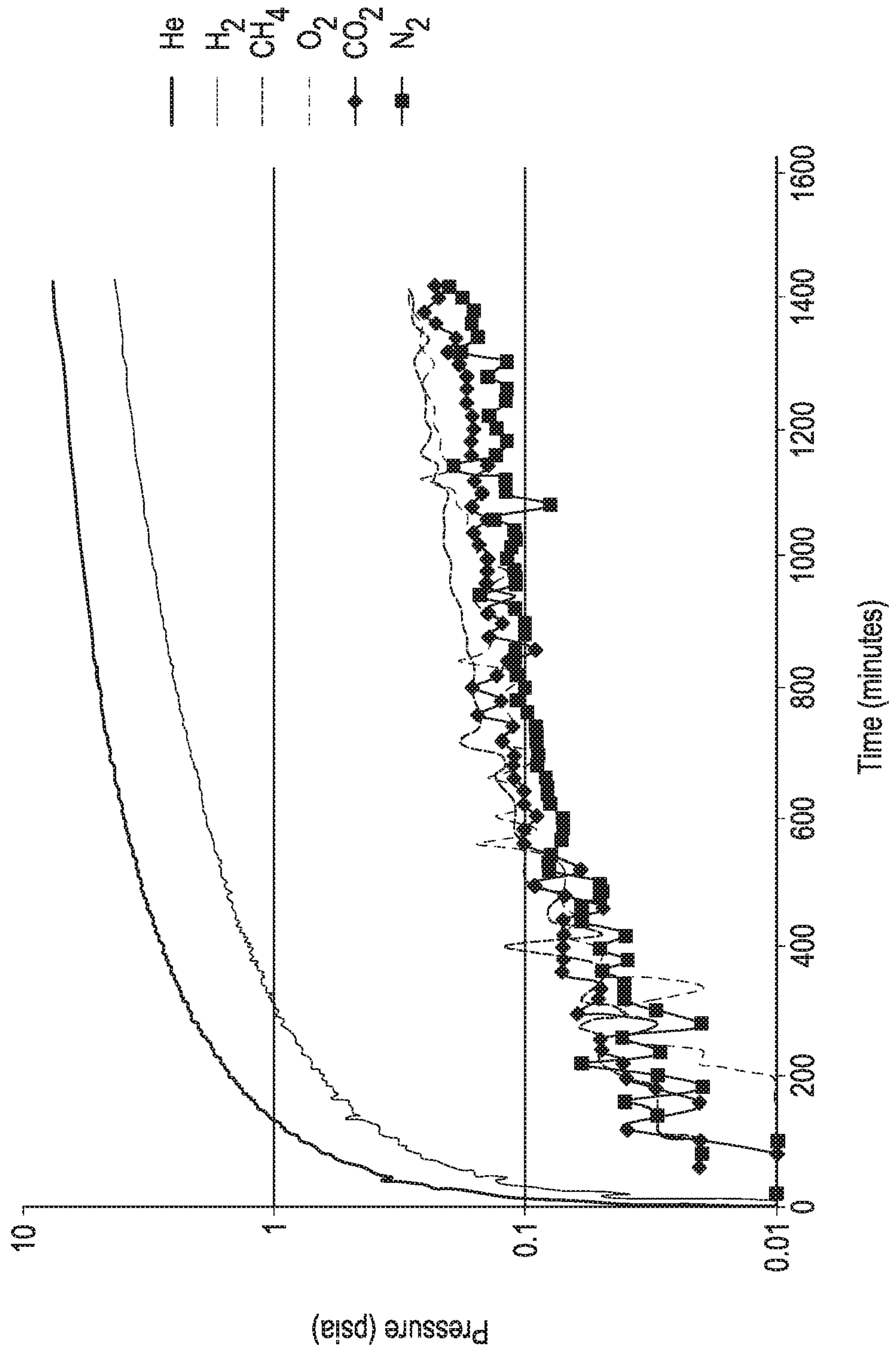

He
H2
CH4
O2
CO2
N2
Pressure (psia)
10
1
0.1
0.01
Time (minutes)
0
200
400
600
800
1000
1200
1400
1600


*FIG. 2*

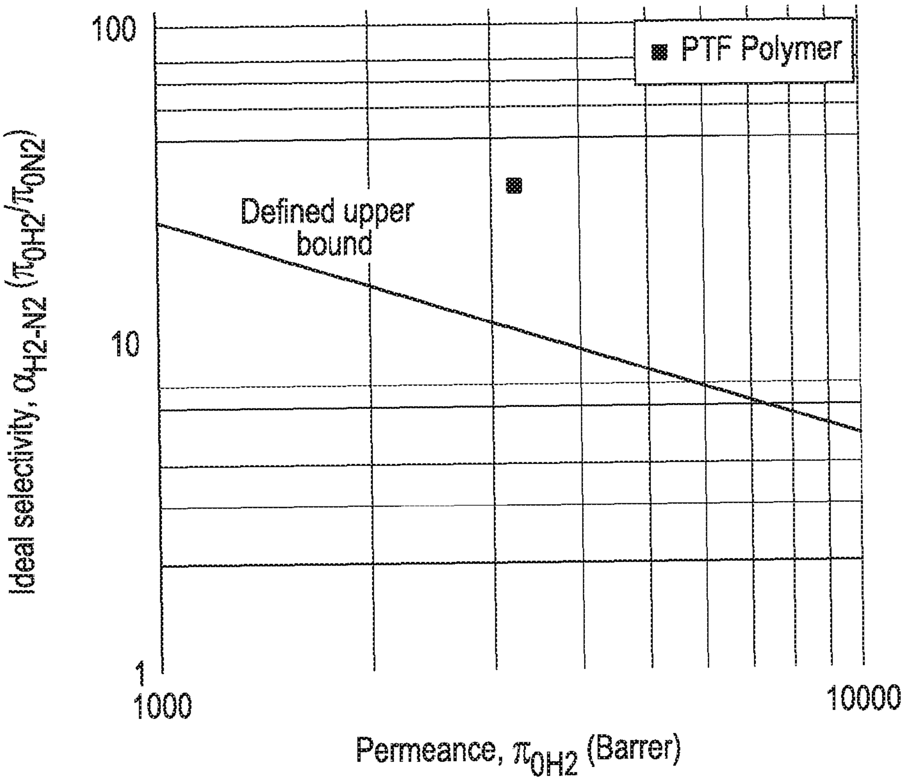
100
10
1
1000
10000
PTF Polymer
Defined upper bound
Ideal selectivity, $\alpha_{H2-N2}$ ($\pi_{0H2}/\pi_{0N2}$)
Permeance, $\pi_{0H2}$ (Barrer)

*FIG. 3*

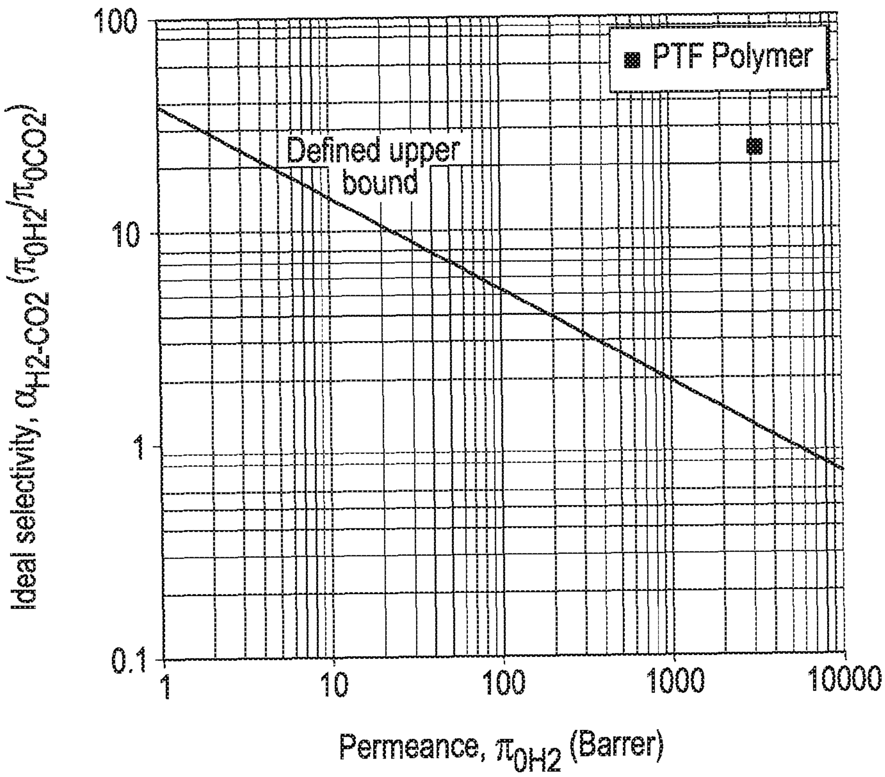
100
10
1
0.1
1
10
100
1000
10000
PTF Polymer
Defined upper bound
Ideal selectivity, $\alpha_{H2-CO2}$ ($\pi_{0H2}/\pi_{0CO2}$)
Permeance, $\pi_{0H2}$ (Barrer)

*FIG. 4*

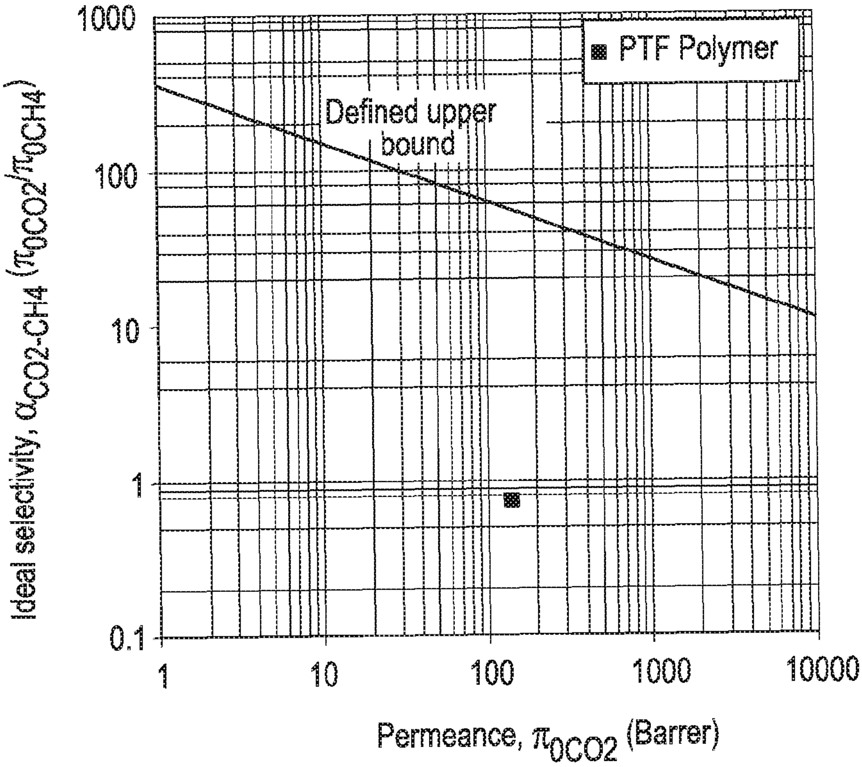
PTF Polymer
Defined upper bound
Ideal selectivity, $\alpha_{CO2\text{-}CH4}$ ($\pi_{0CO2}/\pi_{0CH4}$)
1000
100
10
1
0.1
1
10
100
1000
10000
Permeance, $\pi_{0CO2}$ (Barrer)

*FIG. 5*

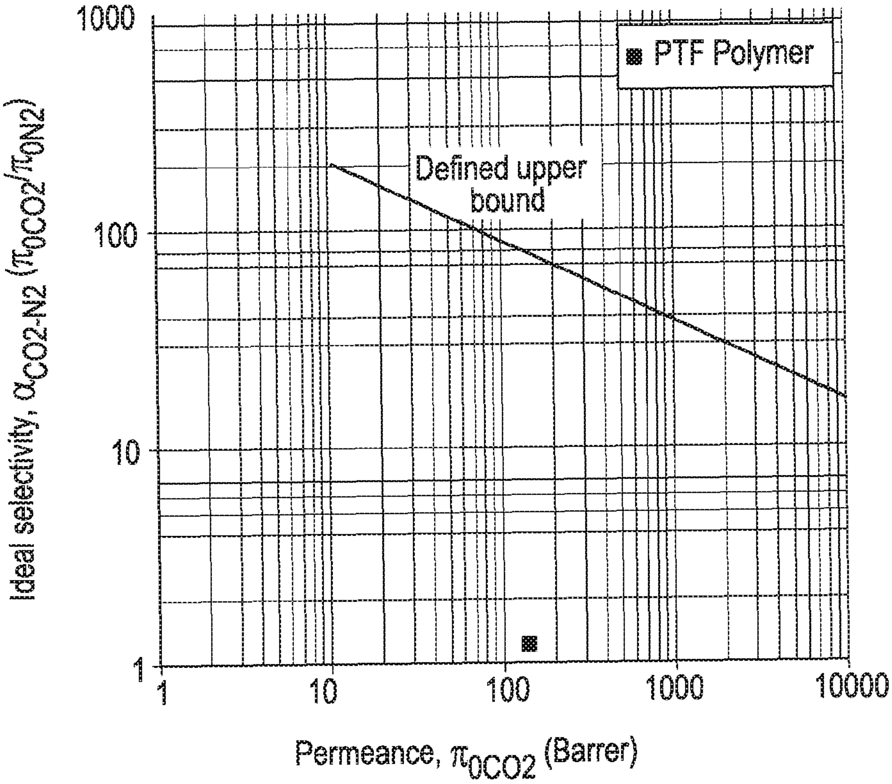
PTF Polymer
Defined upper bound
Ideal selectivity, $\alpha_{CO2\text{-}N2}$ ($\pi_{0CO2}/\pi_{0N2}$)
1000
100
10
1
1
10
100
1000
10000
Permeance, $\pi_{0CO2}$ (Barrer)

*FIG. 6*

Europäisches Patentamt
European Patent Office
Office européen des brevets

# EUROPEAN SEARCH REPORT

Application Number
EP 22 17 0355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 0 480 039 A1 (TORAY INDUSTRIES [JP]) 15 April 1992 (1992-04-15)<br>* page 4, line 6 - line 18 *<br>* page 8, line 2 - line 7 *<br>----- | 13,14<br>1-12,15 | INV.<br>B01D53/22<br>B01D71/48<br>B01D71/76<br>B01D71/82 |
| Y | WO 2015/030594 A1 (UNIV TWENTE [NL]) 5 March 2015 (2015-03-05)<br>* the whole document *<br>----- | 1-6,12, 15 | |
| Y | WO 2015/060718 A1 (FURANIX TECHNOLOGIES BV [NL]) 30 April 2015 (2015-04-30)<br>* page 4, line 24 - page 5, line 32 *<br>----- | 7-11 | |
| A | DATABASE WPI<br>Week 201241<br>Thomson Scientific, London, GB;<br>AN 2012-F52664<br>XP002762035,<br>-& CN 102 432 847 A (CHINESE ACAD SCI CHANGCHUN APPLIED CHEM INST)<br>2 May 2012 (2012-05-02)<br>* abstract *<br>* paragraph [0005] - paragraph [0026] *<br>----- | 1-15 | TECHNICAL FIELDS SEARCHED (IPC)<br>B01D |
| A,P | WO 2016/019267 A1 (DU PONT [US]) 4 February 2016 (2016-02-04)<br>* the whole document *<br>----- | 1-15 | |
| A | WO 2015/095473 A1 (DU PONT [US]) 25 June 2015 (2015-06-25)<br>* the whole document *<br>----- | 1-15 | |
| A | US 4 994 095 A (KAWAKAMI JAMES H [US] ET AL) 19 February 1991 (1991-02-19)<br>* the whole document *<br>----- | 1-15 | |
| X | JP S63 11503 A (AGENCY IND SCIENCE TECHN) 19 January 1988 (1988-01-19)<br>* abstract *<br>----- | 1-15 | |

The present search report has been drawn up for all claims

1

| Place of search | Date of completion of the search | Examiner |
|---|---|---|
| Munich | 10 August 2022 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 17 0355

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2022

| Patent document cited in search report | Publication date | Patent family member(s) | Publication date |
|---|---|---|---|
| EP 0480039 A1 | 15-04-1992 | DE 69132403 T2 | 29-03-2001 |
| | | EP 0480039 A1 | 15-04-1992 |
| | | KR 920700749 A | 10-08-1992 |
| | | US 5259950 A | 09-11-1993 |
| | | WO 9114499 A1 | 03-10-1991 |
| WO 2015030594 A1 | 05-03-2015 | EP 3041599 A1 | 13-07-2016 |
| | | EP 3659695 A1 | 03-06-2020 |
| | | US 2016199791 A1 | 14-07-2016 |
| | | WO 2015030594 A1 | 05-03-2015 |
| WO 2015060718 A1 | 30-04-2015 | EP 3060599 A1 | 31-08-2016 |
| | | US 2016237211 A1 | 18-08-2016 |
| | | WO 2015060718 A1 | 30-04-2015 |
| CN 102432847 A | 02-05-2012 | NONE | |
| WO 2016019267 A1 | 04-02-2016 | CN 106536187 A | 22-03-2017 |
| | | EP 3174708 A1 | 07-06-2017 |
| | | EP 3736128 A1 | 11-11-2020 |
| | | JP 2017524576 A | 31-08-2017 |
| | | JP 2022000352 A | 04-01-2022 |
| | | KR 20170037966 A | 05-04-2017 |
| | | US 2017210851 A1 | 27-07-2017 |
| | | US 2020247953 A1 | 06-08-2020 |
| | | US 2022111618 A1 | 14-04-2022 |
| | | WO 2016019267 A1 | 04-02-2016 |
| WO 2015095473 A1 | 25-06-2015 | AU 2014364561 A1 | 16-06-2016 |
| | | AU 2018250382 A1 | 08-11-2018 |
| | | CA 2932934 A1 | 25-06-2015 |
| | | CN 105848891 A | 10-08-2016 |
| | | EP 3083242 A1 | 26-10-2016 |
| | | JP 2017501906 A | 19-01-2017 |
| | | KR 20160102227 A | 29-08-2016 |
| | | US 2016311208 A1 | 27-10-2016 |
| | | WO 2015095473 A1 | 25-06-2015 |
| US 4994095 A | 19-02-1991 | CN 1046858 A | 14-11-1990 |
| | | US 4994095 A | 19-02-1991 |
| JP S6311503 A | 19-01-1988 | JP H0379281 B2 | 18-12-1991 |
| | | JP S6311503 A | 19-01-1988 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62196786


### Non-patent literature cited in the description


- **L.M. ROBESON.** The Upper Bound Revisited. *Journal of Membrane Science,* 2008, vol. 320, 390-400